# EUROPÄISCHE PATENTSCHRIFT

(11) **EP 1 367 098 B1**
(45) Veröffentlichungstag und Bekanntmachung des Hinweises auf die Patenterteilung: **21.04.2004**
(21) Anmeldenummer: 02405422.3
(22) Anmeldetag: 27.05.2002
(51) Int. Cl.: C09B 29/30, C09B 62/085, C09D 11/02, C09B 62/51

(54) **Monoazofarbstoffe, deren Herstellung und Verwendung**
Monoazo dyes, their preparation and use
Colorants monoazoiques, leur préparation et leur utilisation

(43) Veröffentlichungstag der Anmeldung: 03.12.2003
(73) Patentinhaber: ILFORD Imaging Switzerland GmbH, 1723 Marly 1 (CH)
(72) Erfinder: Baettig, Kurt, 1724 Praroman - Le Mouret (CH); Stauner, Thomas Dr., 1723 Marly 2 (CH)

(56) Entgegenhaltungen:
- EP-A- 0 602 816
- EP-A- 0 918 074
- US-A- 5 542 970
- PATENT ABSTRACTS OF JAPAN vol. 015, no. 474 (C-0890), 3. Dezember 1991 (1991-12-03) -& JP 03 203970 A (CANON INC), 5. September 1991 (1991-09-05)

## Beschreibung

### Technisches Gebiet

Die Erfindung bezieht sich auf neue Monoazofarbstoffe und ihre Salze, ein Verfahren zu ihrer Herstellung, ihren Einsatz in Färbe- und Druckverfahren sowie auf Farbstoffpräparationen, die diese Farbstoffe enthalten, insbesondere wässrige Tinten für den Tintenstrahldruck.

### Stand der Technik

Beim Tintenstrahldruck sind im wesentlichen zwei Verfahren zu unterscheiden:
Beim kontinuierlichen Tintenstrahldruck wird unter Druck aus einer Düse ein Tintenstrahl erzeugt, der in einem gewissen Abstand von der Düse in einzelne Tröpfchen zerfällt. Die einzelnen Tröpfchen werden je nachdem, ob eine Bildstelle bedruckt werden soll oder nicht, in einen Auffangbehälter abgelenkt oder auf das Aufnahmematerial aufgebracht. Dies geschieht beispielsweise dadurch, dass auf Grund vorgegebener digitaler Daten nicht benötigte Tröpfchen elektrisch aufgeladen und anschliessend in einem statischen elektrischen Feld in den Auffangbehälter abgelenkt werden. Auch das umgekehrte Verfahren ist möglich, in dem ungeladene Tröpfchen in den Auffangbehälter gelangen.
Beim nichtkontinuierlichen Verfahren, dem sogenannten "Drop on demand", werden die Tintentropfen nur dann erzeugt, wenn auf Grund der digitalen Daten ein Bildpunkt dargestellt werden muss.

Tintenstrahldrucker der neusten Generation drucken aus wirtschaftlichen Gründen immer schneller. Sie erlauben auch photoähnliche Ausdrucke digitaler Bilder, die mit Digitalkameras aufgenommen wurden oder die durch Digitalisierung von Aufnahmen auf Silberhalogenidaufnahmefilmen mit Hilfe eines Scanners erzeugt wurden, die sich von herkömmlichen Kopien auf Silberhalogenidmaterialien kaum mehr unterscheiden. Auf solche Weise hergestellte Bilder müssen eine sehr gute Haltbarkeit auch unter ungünstigen Bedingungen aufweisen. Das ist nur mit einem fein abgestimmten System von Tinten (respektive den darin enthaltenen Farbstoffen) und einem geeigneten Aufzeichnungsmaterial möglich.
Für solche Drucker und insbesondere für photoähnliche Ausdrucke besonders geeignete Aufzeichnungsmaterialien müssen die Tinten sehr rasch aufnehmen können. Die Aufzeichnungsmateriälien enthalten organische Polymere und/oder mikroporöse anorganische Oxide. Bis jetzt können die hergestellten Bilder nicht alle an sie gestellten Anforderungen erfüllen, insbesondere lässt die Brillanz der auf diesen Materialien hergestellten Bilder zu wünschen übrig. Es werden deshalb Farbstoffe gesucht, die die Brillanz besonders von roten und purpurnen Farbtönen der auf diesen Materialien hergestellten Bilder verbessern.

Obwohl schon eine ganze Anzahl verschiedener Farbstoffe zur Verwendung im Tintenstrahldruck vorgeschlagen worden sind, vermag noch keiner alle an ihn gestellten Anforderungen zu erfüllen.

Der Purpurfarbstoff der Formel (1) (Beispiel Nr. 2) wird im Patent US 5'542'970 beschrieben.

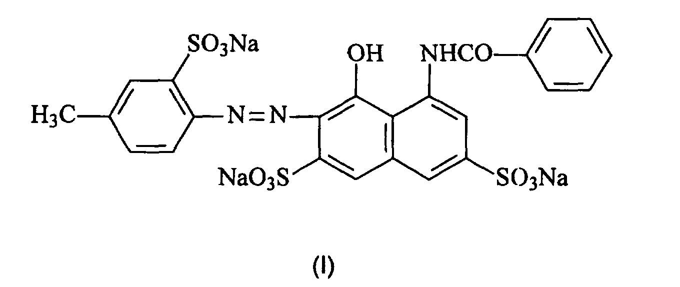

Der Purpurfarbstoff der Formel (II) (Verbindung Nr. 107) wird in der Patentanmel dung EP 0'918'074 beschrieben.

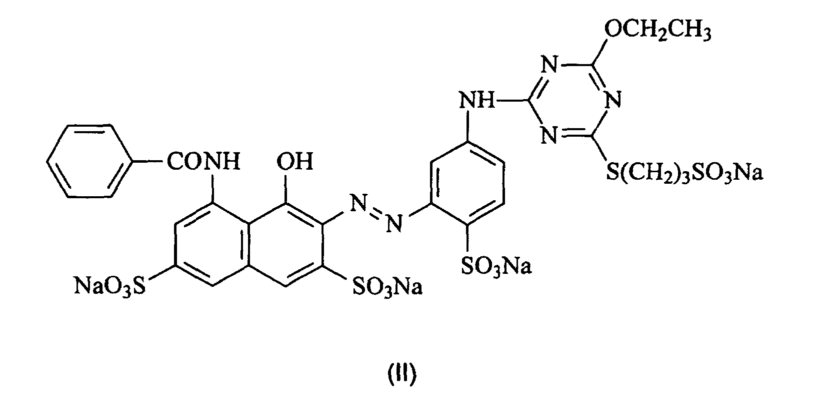

Der Purpurfarbstoff der Formel (III) wird in der Patentanmeldung JP 03-203'970 beschrieben.

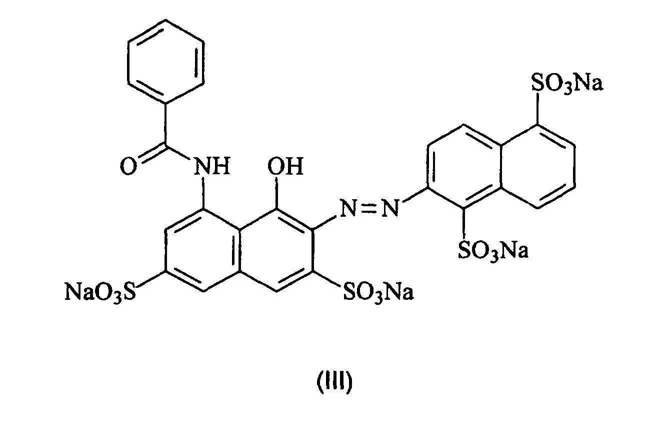

Strukturell ähnliche Purpurfarbstoffe der allgemeinen Formel (XI) werden auch in der Patentanmeldung EP 0'602'816 beschrieben.

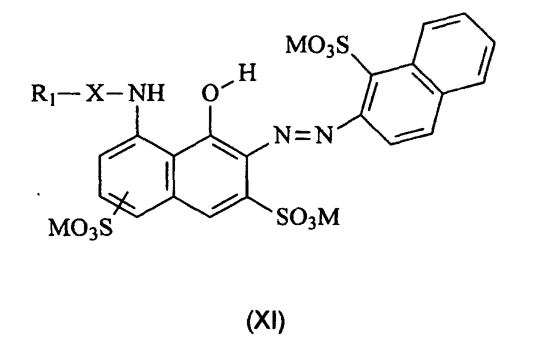

Alle diese Farbstoffe des Standes der Technik vermögen in der Praxis im Tintenstrahldruck nicht alle an sie gestellten Anforderungen zu erfüllen, wenn es darum geht, mit ihnen Tinten herzustellen, die auf allen möglichen Aufnahmematerialien wie unbeschichtetem oder beschichtetem Papier, beschichtetem oder unbeschichtetem, opakem oder durchsichtigem Kunststoffträger purpurne Bilder oder Färbungen mit möglichst brillanten blaustichigen Farbtönen (L*a*b*-Werte mit hohen negativen b-Werten) zu erzeugen.

Farbstoffe für solche Tinten müssen eine gute Löslichkeit in der mehrheitlich wässrigen Tintenflüssigkeit aufweisen, sie müssen ins Aufnahmematerial eindringen und dürfen keine Aggregation an der Oberfläche des Aufnahmematerials zeigen ("Bronzing"). Sie müssen Bilder mit einer hohen optischen Dichte, einer guten Wasserfestigkeit, einer guten Lichtechtheit und einer guten Lagerstabilität auch unter ungünstigen Bedingungen ergeben. Sie müssen in der Tinte stabil sein, auch wenn diese lange Zeit unter ungünstigen Bedingungen gelagert wird. Verschiedene Zusammensetzungen für Tinten sind vorgeschlagen worden. Typische Tinten enthalten einen oder mehrere Farbstoffe oder Pigmente, Wasser, organische Hilfslösungsmittel und andere Zusätze.

Die Tinten müssen die folgenden Anforderungen erfüllen:
(1) Die Tinte ergibt Bilder hochstehender Qualität auf allen möglichen Aufnahmematerialien.
(2) Die Tinte ergibt Bilder mit guter Wasserfestigkeit.
(3) Die Tinte ergibt Bilder mit guter Lichtbeständigkeit.
(4) Die Tinte ergibt Bilder mit hervorragender Abriebfestigkeit.
(5) Die Tinte ergibt Bilder mit hervorragender Lagerbeständigkeit bei hoher Temperatur und Feuchtigkeit.
(6) Die Tinte verstopft die Tintenstrahldruckerdüsen nicht, auch wenn diese längere Zeit während Druckpausen nicht abgedeckt sind.
(7) Die Tinte kann lange Zeit gelagert werden, ohne dass ihre Qualität abnimmt.
(8) Die physikalischen Eigenschaften der Tinte, wie Viskosität, Leitfähigkeit und Oberflächenspannung liegen alle innerhalb vorgegebener, für die Anwendung geeigneter Grenzen.
(9) Die Tinte muss ungiftig, unbrennbar und unschädlich sein.

### Beschreibung der Erfindung

Ziel der Erfindung ist die Bereitstellung neuer, brillanter Monoazofarbstoffe, die einen Thiophensubstituenten enthalten, mit rotem, insbesondere aber purpurnem Farbton, die gleichzeitig lichtecht, diffusionsbeständig und gut löslich sind. Sie ergeben Bilder oder Färbungen mit allgemein guten Eigenschaften, insbesondere im Tintenstrahldruck, wo sie Bilder mit maximaler Farbwiedergabe ergeben, die auch bei längerer Lagerung bei hoher Temperatur und Feuchtigkeit nicht oder höchstens in unbedeutendem Ausmass unscharf werden.
Ein weiteres Ziel der Erfindung ist die Bereitstellung von flüssigen Farbstoffpräparationen, insbesondere von Tinten für den Tintenstrahldruck, die auf allen möglichen Aufnahmematerialien wie unbeschichtetem oder beschichtetem Papier, beschichtetem oder unbeschichtetem, opakem oder durchsichtigem Kunststoffträger eine spektral unveränderte Farbe ergeben.
Ein weiteres Ziel der Erfindung ist die Bereitstellung von Tinten, die alle vorhin erwähnten Anforderungen erfüllen.

Die vorliegende Erfindung bezieht sich auf neue Monoazofarbstoffe der allgemeinen Formel (IV) 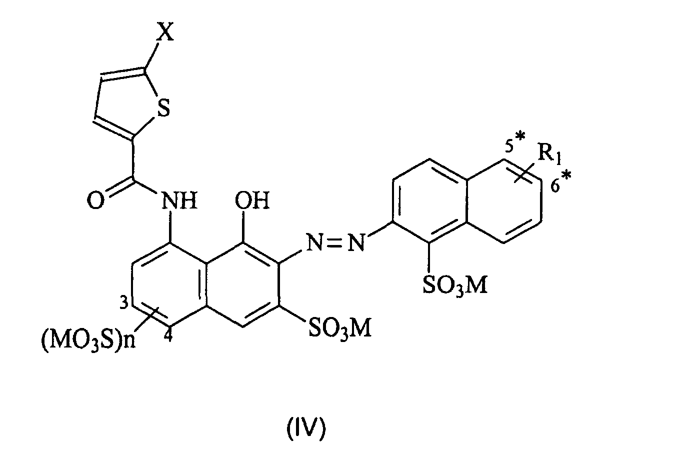 worin
- R₁: für H, SO₃M oder SO₂CH₂CH₂A steht, wobei A OH, OSO₃M oder NR₄R₅ bedeutet;
- R₄, R₅: unabhängig voneinander für H, substituiertes geradkettiges oder verzweigtes Alkyl mit 1 bis 8 Kohlenstoffatomen stehen, wobei die Substituenten aus der Gruppe bestehend aus OH, OCH₃, COOM, SO₃M ausgewählt werden;
- X: für H, Cl oder Br steht;
- M: für H, ein Metallkation oder ein Ammoniumkation, das gegebenenfalls einen oder mehrere Alkylreste oder substituierte Alkylreste oder Hydroxyalkoxyalkylreste mit jeweils 1 bis 18 Kohlenstoffatomen aufweist, steht
und
- n: den Wert 0 oder 1 annimmt,
und der allgemeinen Formel (V) 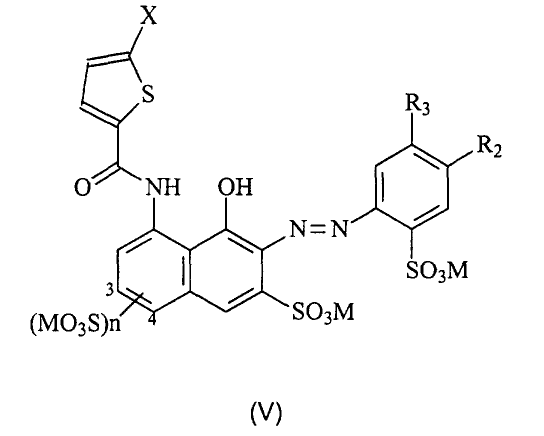 worin
- R₂, R₃: unabhängig voneinander für H, Alkyl oder Alkoxy mit je 1 bis 6 Kohlenstoffatomen, für substituiertes Amid mit bis zu 12 Kohlenstoffatomen, wobei die Substituenten aus der Gruppe bestehend aus COOM, OH, OCH₃, NH₂, Cl, COOCH₃, COOCH₂CH₃ ausgewählt werden; SO₃M, F, Cl oder Br stehen; oder entweder R₂ oder R₃ für einen Rest der Formel (VI) 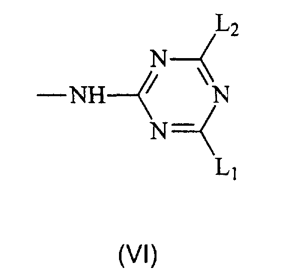 steht, worin L₁ und L₂ unabhängig voneinander OH, Alkoxy mit 1 bis 6 Kohlenstoffatomen, mit OH, COOM oder SO₃M substituiertes Thioalkyl mit 1 bis 6 Kohlenstoffatomen, Cl oder NR₆R₇ bedeuten;
- R₆, R₇: unabhängig voneinander für H, geradkettiges oder verzeigtes Alkyl mit 1 bis 12 Kohlenstoffatomen; substituiertes Alkyl mit 2 bis 6 Kohlenstoffatomen, wobei die Substituenten aus der Gruppe bestehend aus OH, OCH₃, COOM, SO₃M, N(CH₃)₂ ausgewählt werden; Aralkyl; Aryl oder substituiertes Aryl, wobei die Substituenten aus der Gruppe bestehend aus OCH₃, Cl, Br, COOM oder SO₃M ausgewählt werden; stehen, oder worin R₆ und R₇ einen Ring mit oder ohne Heteroatom bilden;
- X: für H, Cl oder Br steht;
- M: für H, ein Metallkation oder ein Ammoniumkation, das gegebenenfalls einen oder mehrere Alkylreste oder substituierte Alkylreste oder Hydroxyalkoxyalkylreste mit jeweils 1 bis 18 Kohlenstoffatomen aufweist, steht
und
- n: den Wert 0 oder 1 annimmt.

Bevorzugt sind Monoazofarbstoffe der allgemeinen Formel (IV), bei denen X, M und n die gleiche Bedeutung wie vorhin angegeben haben und
- R₁: für H oder SO₃M steht.

Besonders bevorzugt sind nicht reaktive Farbstoffe der allgemeinen Formel (VII), die einen Rest der Formel (VI) enthalten, worin X, R₆, R₇ und n die vorhin angegebene Bedeutung haben 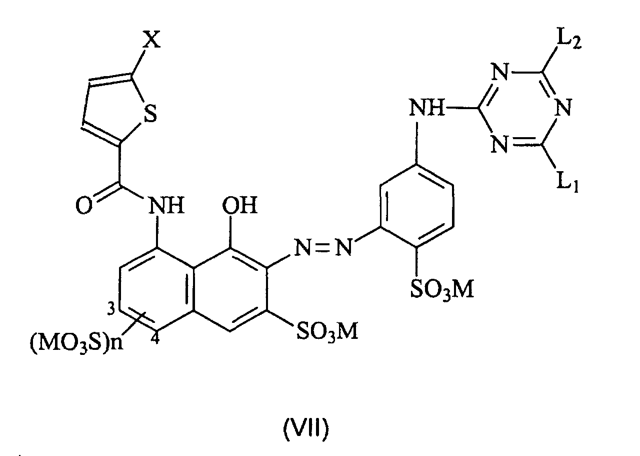 und
- L₁, L₂: unabhängig voneinander OH, Alkoxy mit 1 bis 6 Kohlenstoffatomen, mit OH, COOM oder SO₃M substituiertes Thioalkyl mit 1 bis 6 Kohlenstoffatomen oder NR₆R₇ bedeuten.

Erfindungsgemässe Farbstoffe der allgemeinen Formel (IV), bei denen R₁ dem Rest SC₂CH₂CH₂OSO₃M entspricht, sowie Farbstoffe der allgemeinen Formel (V), bei denen L₁ ein Chloratom ist, sind reaktive Farbstoffe. Diese Farbstoffe können chemisch an geeignete Substrate, insbesondere textile Materialien, gebunden werden.

Bevorzugt werden als Metallkationen die Kationen der Alkalimetalle (Li, Na, K), der Erdalkalimetalle (Mg, Ca, Ba) sowie das Ammoniumkation, das gegebenenfalls einen oder mehrere Alkylreste 1 bis 4 Kohlenstoffatomen oder mit OH substituierte Alkylreste mit jeweils 1 bis 6 Kohlenstoffatomen aufweist. Farbstoffe, die ein dermassen substituiertes Ammoniumkation enthalten, zeigen eine besonders hohe Löslichkeit.

Die hergestellten Farbstoffe der allgemeinen Formel (IV) sind zusammen mit ihrem Absorptionsmaximum in wässriger Lösung in Tabelle 1 zusammengestellt:

**Tabelle 1**

| Verbindung Nr. | n / Position | R₁ / Position | X | M | λₘₐₓ in H₂ O (nm) |
|---|---|---|---|---|---|
| 10 | 1 / 3 | SO₃M / 5 | H | Na | 541 |
| 11 | 0 | SO₃M / 5 | H | Na | 514 |
| 12 | 0 | SO₃M / 6 | H | Na | 531 |
| 13 | 1 / 3 | SO₃M / 6 | H | K | 543 |
| 14 | 0 | H | H | Li | 518 |
| 15 | 1 / 3 | H | H | Na | 546 |
| 16 | 1 / 4 | H | H | Na | 515 |
| 17 | 1 / 4 | SO₃M / 5 | H | Na | 511 |
| 18 | 1 / 3 | SO₃M / 5 | Br | Na | 543 |
| 19 | 1 / 4 | SO₃M / 5 | Br | Na | 513 |
| 20 | 0 | SO₃M / 5 | Br | Na | 516 |
| 21 | 1 / 4 | SO₃M / 6 | Br | Na | 535 |
| 22 | 1 / 4 | H | Br | Na | 516 |

Die hergestellten Farbstoffe der allgemeinen Formel (V) sind zusammen mit ihrem Absorptionsmaximum in wässriger Lösung in Tabelle 2 zusammengestellt:

**Tabelle 2**

| Verbindung Nr. | n / Position | R₂ | R₃ | X | M | λₘₐₓ in H₂O (nm) |
|---|---|---|---|---|---|---|
| 50 | 1 / 3 | CH₃ | H | H | Na | 547 |
| 51 | 1/3 | CH₃ | H | H | K | 547 |
| 52 | 0 | OCH₃ | H | H | Na | 531 |
| 53 | 1 / 3 | H | H | H | Li | 534 |
| 54 | 1/3 | NHCOCH₃ | H | H | Na | 536 |
| 55 | 1/3 | H | NHCOCH₃ | H | Na | 533 |
| 56 | 1 / 3 | H | NHCOCH₂Cl | H | Na | 533 |
| 57 | 1/3 | H | NHCH₂CH₂COOM | H | Na | 516 |
| 58 | 1 / 3 | OCH₃ | H | H | K | 537 |
| 59 | 0 | CH₃ | H | H | Na | 519 |
| 60 | 0 | H | H | H | Na | 512 |
| 61 | 1 / 4 | OCH₃ | H | H | Na | 520 |

Die hergestellten Farbstoffe der allgemeinen Formel (VII) sind zusammen mit ihrem Absorptionsmaximum in wässriger Lösung in Tabelle 3 zusammengestellt:

**Tabelle 3**

| Verbindung Nr. | n / Position | L₁ | L₂ | X | M | λₘₐₓ in H₂O (nm) |
|---|---|---|---|---|---|---|
| 100 | 1 / 3 | S(CH₂)₃SO₃M | OCH₂CH₃ | H | Na | 535 |
| 101 | 1/3 | Cl | OCH₂CH₃ | H | Na | 532 |

Die Verbindungen der allgemeinen Formeln (IV) und (V) können als freie Säuren oder als anorganische oder organische Salze dieser Säuren vorliegen. Vorzugsweise liegen sie in Form ihrer Alkali- oder Ammoniumsalze vor, wobei das Ammoniumkation substituiert sein kann. Beispiele solcher substituierter Ammoniumkationen sind 2-Hydroxyethylammonium, Bis-(2-hydroxyethyl)-ammonium, Tris-(2-hydroxyethyl)-ammonium, Bis-(2-hydroxyethyl)-methyl-ammonium, Tris-[2-(2-methoxyethoxy)-ethyl]-ammonium, 8-Hydroxy-3,6-dioxaoctylammonium und Tetraalkylammonium wie beispielsweise Tetramethylammonium oder Tetrabutylammonium.
Weiter betrifft die Erfindung nicht nur reine Monoazofarbstoffe der allgemeinen Formeln (IV) und (V), sondern auch Gemische dieser Verbindungen.

Die Erfindung betrifft weiterhin ein Verfahren zur Herstellung der erfindungsgemässen Monoazofarbstoffe der allgemeinen Formeln (IV) und (V), das dadurch gekennzeichnet ist, dass

ein Amin der allgemeinen Formel (VIII) 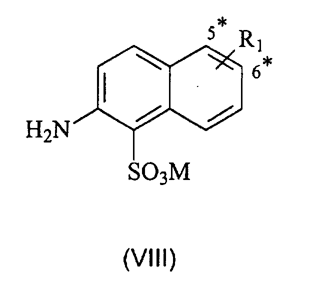 oder (IX), 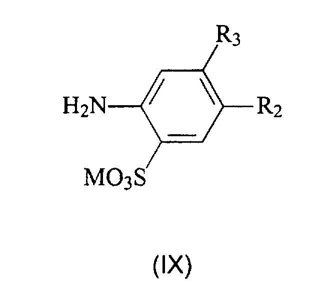 worin R₁, R₂, R₃ und M die gleiche Bedeutung wie vorher angegeben haben, diazotiert und anschliessend mit einer Verbindung der Formel (X), 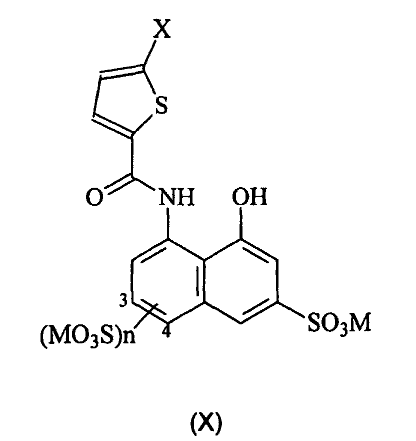 worin M, X und n die gleiche Bedeutung wie vorher angegeben haben, unter Bedingungen gekuppelt wird, dass die erfindungsgemässen Farbstoffe der allgemeinen Formeln (IV) und (V) gebildet werden.

Die erfindungsgemässen Farbstoffe der allgemeinen Formeln (IV) und (V) färben cellulosehaltige Materialien, Papier, Leder oder textile Materialien wie beispielsweise Baumwolle, Wolle, Polyamid und Viskose mit guten Nass- und Lichtechtheiten.
Falls die erfindungsgemässen Farbstoffe der allgemeinen Formel (IV) als Substituenten R₁ die reaktive Gruppe SO₂CH₂CH₂OSO₃M und die erfindungsgemässen Farbstoffe der allgemeinen Formel (V) als Substituenten L₁ oder L₂ ein Chloratom enthalten, ist es besonders vorteilhaft, wenn die Farbstoffe nach der Färbung oder dem Bedrucken durch Erwärmen auf eine Temperatur von 60° C bis 130° C, vorzugsweise 80° C bis 120° C auf dem textilen Material fixiert werden.
Die Farbstoffe können nach allen in der Papier- und Textilindustrie für Substantivfarbstoffe gebräuchlichen Verfahren verwendet werden, insbesondere in der Massen- wie in der Oberflächenbehandlung von Papier für geleimte oder ungeleimte Sorten. Sie können auch in der Garn- und Stückfärberei von Baumwolle, Viskose und Leinen nach dem Ausziehverfahren oder im kontinuierlichen Verfahren angewandt werden.

Die Erfindung betrifft weiter flüssige Farbstoffpräparationen, die mindestens einen Farbstoff der allgemeinen Formeln (IV) oder (V) enthalten. Diese Anwendungsform ist insbesondere beim Färben von Papier bevorzugt. Die Herstellung von stabilen, flüssigen, vorzugsweise wässrigen, konzentrierten Färbepräparaten kann auf allgemein bekannte Weise erfolgen, vorteilhaft durch Lösen in geeigneten Lösungsmitteln. Von besonderem Vorteil ist die Herstellungsmöglichkeit solcher stabilen, wässrig-konzentrierten Präparationen im Zuge der Farbstoffsynthese selbst ohne Zwischenisolierung des Farbstoffs, beispielsweise nach einer Entsalzung der Reaktionslösung durch Ultrafiltration.

Farbstoffe oder Mischungen von Farbstoffen der allgemeinen Formeln (IV) und (V) sind ausgezeichnete Farbstoffe zur Herstellung von Tinten für den Tintenstrahldruck.
Die erfindungsgemässen Farbstoffe der Formeln (IV) oder (V) sind gut mit anderen Purpurfarbstoffen, insbesondere solchen, wie sie beispielsweise in den Patentanmeldungen WO 96/24'636, EP 0'918'074 und EP 1'006'157 und im Patent US 5'074'914 beschrieben worden sind, kombinierbar.

Eine solche Tinte enthält eine oder mehrere der erfindungsgemässen Verbindungen in einem flüssigen wässrigen Lösungsmittel. Die Tinte enthält 0.5 bis 20 Gewichtsprozent, vorzugsweise 0.5 bis 8 Gewichtsprozent dieser Verbindungen, bezogen auf das Gesamtgewicht der Tinte. Das flüssige Lösungsmittel besteht vorzugsweise aus Wasser oder aus einer Mischung von Wasser und mit Wasser mischbaren organischen Lösungsmitteln. Geeignete Lösungsmittel sind beispielsweise in den Patenten US 4'626'284, US 4'703'113 und US 4'963'189 und den Patentanmeldungen GB 2'289'473 und EP 0'425'150 und EP 0'597'672 beschrieben worden.

Die vorliegende Erfindung wird durch die folgenden Beispiele näher beschrieben, ohne dass dadurch die beanspruchten Verbindungen in irgendeiner Weise eingeschränkt werden.

### Beispiele

### Beispiel 1

Die Verbindung Nr. 10 aus Tabelle 1 wurde folgendermassen hergestellt:

### Farbstoff-Kupplungskomponente

Die Verbindung der Formel (X), 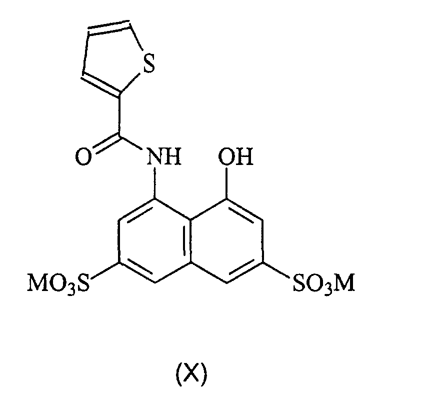 worin M für Na steht, wurde folgendermassen hergestellt:
160.6 g (0.4 Mol) des Mononatriumsalzes der 4-Amino-5-hydroxynaphthalin-2,7-disulfonsäure (Gehalt 85 %, erhältlich bei MERCK Schuchardt, Darmstadt, Deutschland) wurden in 720 ml Wasser suspendiert und der pH-Wert durch Zugabe von Natronlauge (30 %) auf 5 gestellt. Zu diesem Gemisch wurde bei einer Temperatur von 20° C bis 30°C unter Rühren während 1 Stunde 72.5 g (0.48 Mol) Thiophen-2-carbonsäurechlorid (Gehalt 97 %, erhältlich bei Fluka Chemie GmbH, Buchs, Schweiz) zugetropft und der pH-Wert durch gleichzeitiges Zudosieren von Natronlauge (30 %) zwischen 5.0 und 6.0 gehalten. Nach beendeter Zugabe wurde 2 Stunden bei Raumtemperatur nachgerührt. Anschliessend wurde das erhaltene Gemisch auf 5°C abgekühlt und das ausgefallenen Produkt abgenutscht und getrocknet. Man erhielt so 160 g des Produkts der Formel (X).

### Diazosuspension A

30.3 g (0.1 Mol) 2-Naphthylamin-1,5-disulfonsäure (erhältlich bei Acros Organics, Geel, Belgien) wurden in 400 ml Wasser suspendiert und der pH-Wert durch Zugabe von Natronlauge (30 %) auf 8.0 eingestellt. Die resultierende Lösung wurde auf eine Temperatur von 0° C bis 5° C abgekühlt und es wurden 25 ml einer wässrigen Natriumnitritlösung (4N) zugegeben. Bei einer Temperatur von 0° C bis 10°C wurde unter Rühren während 10 Minuten 25 ml wässrige Salzsäurelösung (37 %) zugegeben. Anschliessend wurde 1 Stunde bei dieser Temperatur weitergerührt. Die im Überschuss vorhandene salpetrige Säure wurde anschliessend durch Reaktion mit Sulfaminsäure entfernt.

### Herstellung des Farbstoffs 10

Bei einer Innentemperatur von 5° C bis 10° C wurde zur Suspension von 47.3 g (0.1 Mol) Kupplungskomponente der Formel (X) in 300 ml Wasser unter Rühren während 30 Minuten die obige Diazosuspension A zugegeben und der pH-Wert durch gleichzeitiges Zudosieren von Natronlauge (20 %) zwischen 8 und 10 gehalten. Nach beendeter Zugabe wurde 2 Stunden bei einer Temperatur zwischen 5° C und 20°C und anschliessend 18 Stunden bei Raumtemperatur weitergerührt. Der Farbstoff wurde durch Zugabe von Natriumchlorid ausgesalzen, der Niederschlag abfiltriert und durch zweimaliges Umfällen aus Wasser / Ethanol gereinigt. Man erhielt so 52 g des Farbstoffs Nr. 10.

Auf ähnliche Art und Weise können durch die Wahl geeigneter Ausgangsmaterialien die erfindungsgemässen thiophenhaltigen Monoazofarbstoffe 11 bis 22, 50 bis 61 sowie 100 bis 101 hergestellt werden.

### Herstellungsbeispiel für Tinten

Die vorliegende Erfindung wird, soweit sie sich auf Tinten bezieht, durch die folgenden Beispiele beschrieben, in denen erfindungsgemässe Farbstoffe aus den Tabellen 1, 2 und 3 und Farbstoffe des Standes der Technik eingesetzt werden. 100 g jeder Tinte wurden hergestellt, indem die benötigte Menge Farbstoff (2 - 5 g), Glycerin (5 g), Ethylenglykol (5 g), Tergitol 15-S-7 (erhältlich bei Union Carbide Co., Houston, USA) (0.5 g) und eine Biocid-Lösung (Mergal K 10N, erhältlich bei Riedel-de-Haen, Seelze, Deutschland) (0.2 g) zusammen mit Wasser etwa 1 Stunde unter Rühren auf eine Temperatur von 50° C erwärmt wurden. Die erhaltene Lösung wurde auf eine Temperatur von 20° C abgekühlt und ihr pH-Wert auf 7.5 eingestellt. Anschliessend wurde die Lösung durch ein Millipore®-Filter mit 0.5 µm Porendurchmesser abfiltriert. Die Farbstoffmenge wurde so gewählt, dass die optische Dichte des bedruckten Bildes für alle Farbstoffe möglichst gleich war.

### Anwendungsbeispiele von Tinten

Die Tinten wurden anschliessend mit Hilfe eines Tintenstrahldruckers des Typs BJC 8500 von Canon auf die Aufnahmematerialen ILFORD Photo Paper IJP1GP7 (erhältlich bei ILFORD Imaging Switzerland GmbH, Freiburg, Schweiz) (Material 1) und Xerox 4024 DP (Material 2) aufgebracht.

Anschliessend wurden die Farbkoordinaten (L*a*b*-Werte) an den bedruckten Mustern mit Hilfe eines Spektrometers Gretag SPM 100, erhältlich bei Gretag AG, Regensdorf, Schweiz, gemessen.

Die L*a*b*-Werte für die Lichtart D₆₅ sind in Tabelle 6 paarweise für die erfindungsgemässen Farbstoffe und die Farbstoffe des Standes der Technik zusammengestellt, wobei die erfindungsgemässen Farbstoffe einen Thiophensubstituenten, die Farbstoffe des Standes der Technik an derselben Stelle einen Phenylsubstituenten enthalten.

**Tabelle 6**

| Verbindung Nr. | L*a*b*-Werte (Material 1) | L*a*b*-Werte (Material 2) |
|---|---|---|
| 10 | 46.6 / 81.5 / -11.9 | 52.9 / 65.0 / -8.8 |
| I | 47.0 / 85.1 / -10.4 | 53.3 / 68.7 / -7.4 |
| 50 | 47.1 / 84.0 / -14.7 | 53.3 / 67.5 / -10.8 |
| II | 45.6 / 83.1 / -3.5 | 52.9 / 66.1 / -2.7 |
| 100 | 45.4 / 77.4 / -10.1 | 52.1 / 61.1 / -6.6 |
| III | 46.9 / 84.0 / -8.2 | 53.2 / 67.3 / -5.8 |

Ein Vergleich der gemessenen L*a*b*-Werte von bedruckten Mustern, in denen die Tinten die erfindungsgemässen Farbstoffe aus Tabelle 6 enthalten, zeigt klar, dass Tinten mit den erfindungsgemässen, einen Thiophenrest enthaltenden Farbstoffen negativere b*-Werte aufweisen als Tinten, die die äquivalenten, einen Phenylrest enthaltenden bekannten Monoazofarbstoffe (1), (II) und (III) des Standes der Technik enthalten. Die erfindungsgemässen brillanten, Purpurfarbstoffe mit bläulichem Farbton sind deshalb für die Anwendung im Tintenstrahldruckverfahren besonders geeignet, weil sie zusammen mit geeigneten Gelb- und Blaugrünfarbstoffen eine Erweiterung des Farbraums erlauben.

## Patentansprüche

1. Monoazofarbstoffe der allgemeinen Formel (IV) 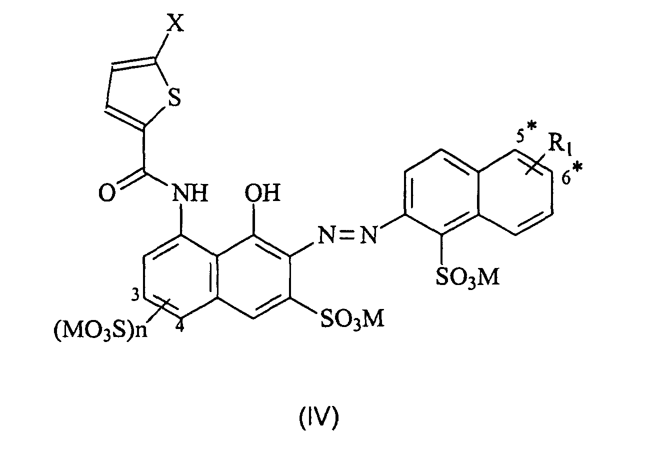 worin
R₁ für H, SO₃M oder SO₂CH₂CH₂A steht, wobei A OH, OSO₃M oder NR₄R₅ bedeutet;
R₄, R₅ unabhängig voneinander für H, substituiertes geradkettiges oder verzweigtes Alkyl mit 1 bis 8 Kohlenstoffatomen stehen, wobei die Substituenten aus der Gruppe bestehend aus OH, OCH₃, COOM, SO₃M ausgewählt werden;
X für H, Cl oder Br steht;
M für H, ein Metallkation oder ein Ammoniumkation, das gegebenenfalls einen oder mehrere Alkylreste oder substituierte Alkylreste oder Hydroxyalkoxyalkylreste mit jeweils 1 bis 18 Kohlenstoffatomen aufweist, steht
und
n den Wert 0 oder 1 annimmt,
und der allgemeinen Formel (V) 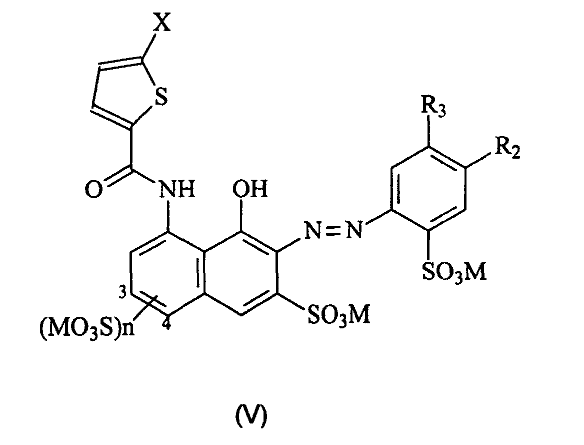 worin
R₂, R₃ unabhängig voneinander für H, Alkyl oder Alkoxy mit je 1 bis 6 Kohlenstoffatomen, für substituiertes Amid mit bis zu 12 Kohlenstoffatomen, wobei die Substituenten aus der Gruppe bestehend aus COOM, OH, OCH₃, NH₂, Cl, COOCH₃, COOCH₂CH₃ ausgewählt werden; SO₃M, F, Cl oder Br stehen; oder entweder R₂ oder R₃ für einen Rest der Formel (VI) 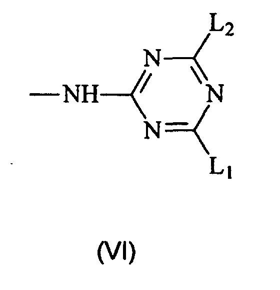 steht,
worin
L₁, L₂ unabhängig voneinander OH, Alkoxy mit 1 bis 6 Kohlenstoffatomen, mit OH, COOM oder SO₃M substituiertes Thioalkyl mit 1 bis 6 Kohlenstoffatomen, Cl oder NR₆R₇ bedeuten;
R₆, R₇ unabhängig voneinander für H, geradkettiges oder verzeigtes Alkyl mit 1 bis 12 Kohlenstoffatomen; substituiertes Alkyl mit 2 bis 6 Kohlenstoffatomen, wobei die Substituenten aus der Gruppe bestehend aus OH, OCH₃, COOM, SO₃M, N(CH₃)₂ ausgewählt werden; Aralkyl; Aryl oder substituiertes Aryl, wobei die Substituenten aus der Gruppe bestehend aus OCH₃, Cl, Br, COOM oder SO₃M ausgewählt werden; stehen, oder worin R₆ und R₇ einen Ring mit oder ohne Heteroatom bilden;
X für H, Cl oder Br steht;
M für H, ein Metallkation oder ein Ammoniumkation, das gegebenenfalls einen oder mehrere Alkylreste oder substituierte Alkylreste oder Hydroxyalkoxyalkylreste mit jeweils 1 bis 18 Kohlenstoffatomen aufweist, steht
und
n den Wert 0 oder 1 annimmt.

2. Monoazofarbstoffe der Formel (IV),
worin R₄, R₅, X, M und n die gleiche Bedeutung wie in Anspruch 1 haben
und
R₁ für H oder SO₃M steht.

3. Monoazofarbstoffe der Formel (VII), 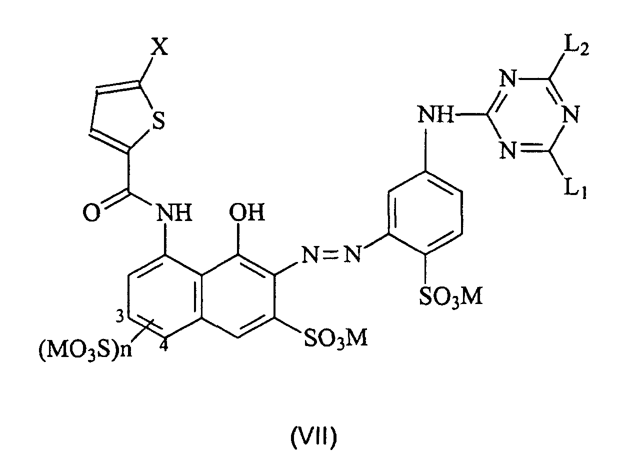 worin R₆, R₇, X, M und n die gleiche Bedeutung wie in Anspruch 1 haben
und
L₁, L₂ unabhängig voneinander OH, Alkoxy mit 1 bis 6 Kohlenstoffatomen, mit OH, COOM oder SO₃M substituiertes Thioalkyl mit 1 bis 6 Kohlenstoffatomen oder NR₆R₇ bedeuten.

4. Verfahren zur Herstellung der Monoazofarbstoffe nach Anspruch 1, **dadurch gekennzeichnet, dass**
ein Amin der allgemeinen Formel (VIII) 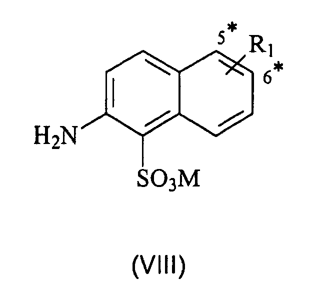 oder (IX), 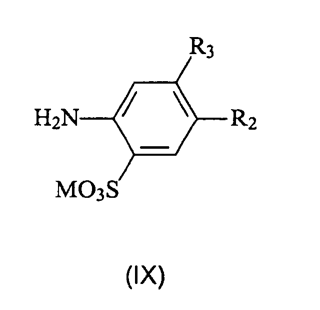 worin R₁, R₂, R₃ und M die gleiche Bedeutung wie in Anspruch 1 haben, diazotiert und anschliessend mit einer Verbindung der Formel (X), 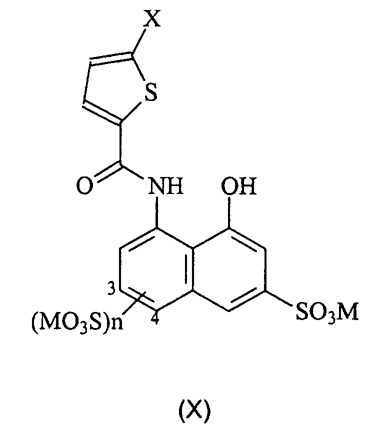 worin X und n die gleiche Bedeutung wie in Anspruch 1 haben, unter Bedingungen gekuppelt wird, dass die erfindungsgemässen Farbstoffe der allgemeinen Formeln (IV) und (V) gebildet werden.

5. Verwendung der Monoazofarbstoffe nach einem oder mehreren der Ansprüche 1 bis 3 zum Färben und Bedrucken cellulosehaltiger Materialien, von Papier, Leder oder textiler Materialien wie Baumwolle, Wolle, Polyamid und Viskose.

6. Flüssige Farbstoffpräparationen, die mindestens einen Farbstoff oder eine Mischung von Farbstoffen nach einem oder mehreren der Ansprüche 1 bis 3 enthalten.

7. Tinten für den Tintenstrahldruck, die mindestens einen Farbstoff oder eine Mischung von Farbstoffen nach einem oder mehreren der Ansprüche 1 bis 3 enthalten.

8. Tinten für den Tintenstrahldruck, die neben mindestens einem Farbstoff oder einer Mischung von Farbstoffen nach einem oder mehreren der Ansprüche 1 bis 3, einen oder mehrere weitere Farbstoffe enthalten.

9. Verfahren zum Bedrucken eines textilen Materials mit einer Tinte nach einem der Ansprüche 7 oder 8, die einen oder mehrere Farbstoffe nach Anspruch 1 enthält,
worin
R₂, R₃, R₄, R₅, R₆, R₇, X, M und n die gleiche Bedeutung wie in Anspruch 1 haben;
R₁ die Gruppe SO₂CH₂CH₂OSO₃M
und
L₁ ein Chloratom bedeutet;
wobei in einem ersten Schritt die Tinte mit Hilfe eines Tintenstrahldruckers auf das textile Material aufgebracht wird und in einem zweiten Schritt der Farbstoff durch Erwärmung auf eine Temperatur von 60° C bis 130° C fixiert wird.

## Claims

1. Monoazo dyes of general formula (IV) 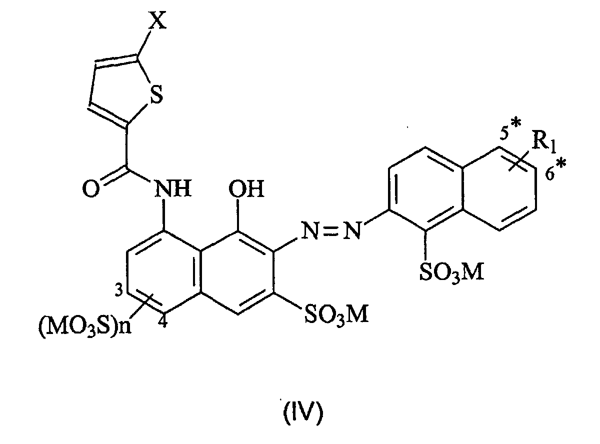 wherein
R₁ represents hydrogen, SO₃M or SO₂CH₂CH₂A, where A represents OH, OSO₃M or NR₄R₅;
R₄, R₅ independently represent hydrogen, substituted unbranched or branched alkyl having from 1 to 8 C atoms, where the substituents are selected from the group consisting of OH, OCH₃, COOM and SO₃M;
X represents hydrogen, chloro or bromo;
M represents hydrogen, a metal cation or an ammonium cation, which may be substituted by one or more alkyl or substituted alkyl groups or hydroxyalkoxyalkyl groups each having from 1 to 18 C atoms
and
n is 0 or 1,
and of general formula (V) 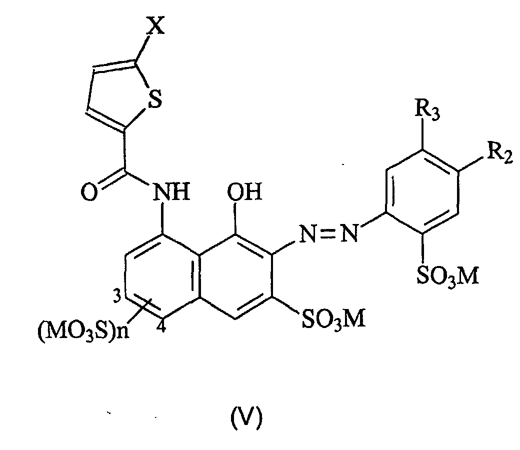 wherein
R₂, R₃ independently represent hydrogen, alkyl or alkoxy each having from 1 to 6 C atoms, substituted amide having up to 12 C atoms, where the substituents are selected from the group consisting of COOM, OH, OCH₃, NH₂, chloro, COOCH₃ and COOCH₂CH₃; SO₃M, fluoro, chloro or bromo; or where either R₂ or R₃ represent a moiety of formula (VI) 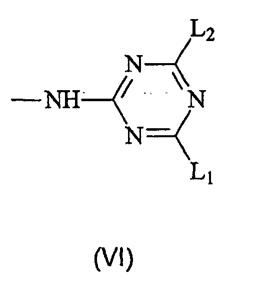
wherein
L₁, L₂ independently represent OH, alkoxy having from 1 to 6 C atoms, substituted thioalkyl having from 1 to 6 C atoms where the substituents are selected from the group consisting of OH, COOM and SO₃M; chloro or NR₆R₇;
R₆, R₇ independently represent hydrogen, unbranched or branched alkyl having from 1 to 12 C atoms, substituted alkyl having from 2 to 6 C atoms, where the substituents are selected from the group consisting of OH, OCH₃, COOM, SO₃M and N(CH₃)₂; aralkyl; aryl or substituted aryl, where the substituents are selected from the group consisting of OCH₃, chloro, bromo, COOM and SO₃M; or where R₆ and R₇ together form a ring with our without a hetero atom;
X represents hydrogen, chloro or bromo;
M represents hydrogen, a metal cation or an ammonium cation, which may be substituted by one or more alkyl or substituted alkyl groups or hydroxyalkoxyalkyl groups each having from 1 to 18 C atoms
and
n is 0 or 1.

2. Monoazo dyes of formula (IV) according to claim 1,
wherein R₄, R₅, X, M and n are as defined in claim 1
and
R₁ represents hydrogen or SO₃M.

3. Monoazo dyes of formula (VII), 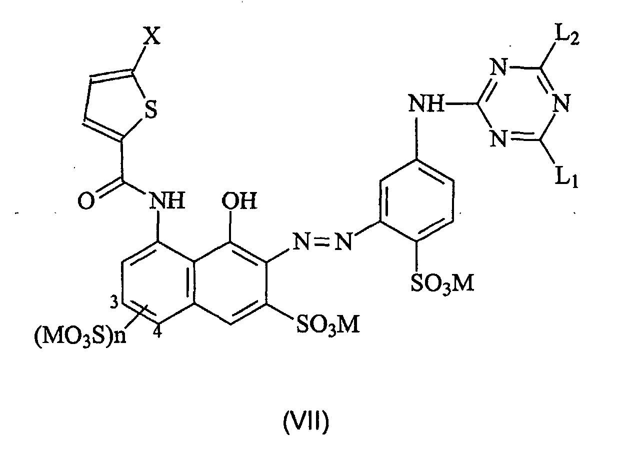 wherein
R₆, R₇, X, M and n are as defined in claim 1,
L₁, L₂ independently represent OH, alkoxy having from 1 to 6 C atoms, substituted thioalkyl having from 1 to 6 C atoms where the substituents are selected from the group consisting of OH, COOM and SO₃M; or NR₆R₇.

4. Process for the preparation of monoazo dyes according to claim 1, wherein an amine of general formula (VIII) 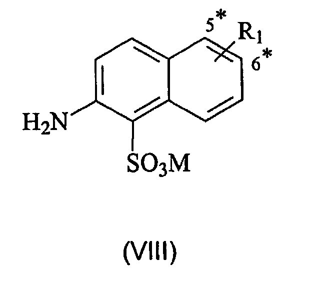 or (IX) 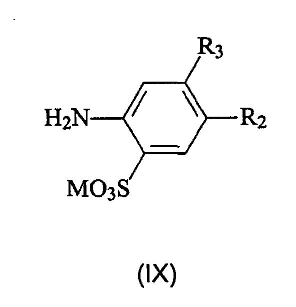 wherein R₁, R₂, R₃ and M are as defined in claim 1,
is diazotized and subsequently coupled with a compound of formula (X), 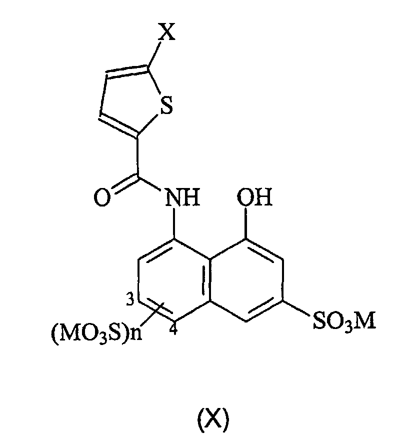 wherein X and n are as defined in claim 1, under conditions that the dyes of general formulas (IV) and (V) according to the invention are formed.

5. Process for dyeing and printing cellulose containing materials, paper, leather or textile materials such as cotton, wool, polyamide and viscose by applying thereto a monoazo dye according to claim 1.

6. Liquid dye preparations comprising at least one monoazo dye or a mixture of monoazo dyes according to claims 1 to 3.

7. Inks for ink jet printing, comprising at least one monoazo dye or a mixture of monoazo dyes according to claims 1 to 3.

8. Inks for ink jet printing, comprising in addition to at least one monoazo dye or a mixture of monoazo dyes according to claims 1 to 3 one or more other dyes.

9. Process for printing of textile materials by applying thereto an ink according to claims 7 or 8 containing one or more dyes according to claim 1,
wherein
R₂, R₃, R₄, R₅, R₆, R₇, X and n are as defined in claim 1;
R₁ represents SO₂CH₂CH₂OSO₃M
and
L₁ represents chloro;
where in a first step the ink is printed onto the textile material with the aid of an ink jet printer and, in a second step, the dye is fixed to the textile material by heating to a temperature from 60° C to 130° C.

## Revendications

1. Colorants monoazoïques de formule générale (IV) 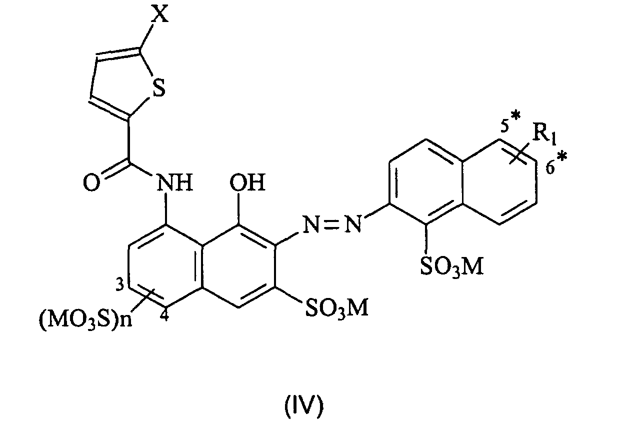 dans laquelle
R₁ représente un atome d'hydrogène, un radical SO₃M ou un radical SO₂CH₂CH₂A où A représente un radical OH, un radical OSO₃M ou un radical NR₄R₅;
R₄, R₅ représentent indépendamment un atome d'hydrogène, un radical alkyle substitué non-ramifié ou ramifié ayant de 1 à 8 atomes de carbone, dans lequel les substituants sont choisis parmi le groupe constitué du radical OH, du radical OCH₃, du radical COOM ou du radical SO₃M;
X représente un atome d'hydrogène, un atome de chlore ou un atome de brome;
M représente un atome d'hydrogène, un cation métallique ou un cation ammonium optionnellement substitués par un ou plusieurs radicaux alkyle, optionnellement substitué, ou un radical hydroxyalcoxyalkyle ayant chacun de 1 à 18 atomes de carbone
et
n vaut 0 ou 1,
et de formule générale (V) 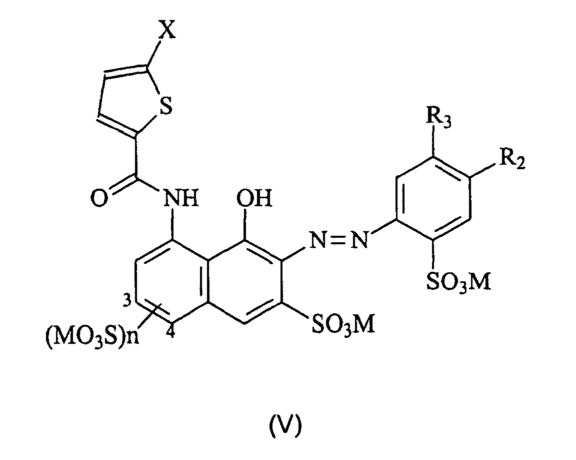 dans laquelle
R₂, R₃ représentent indépendamment un atome d'hydrogène, un radical alkyle ou alcoxy ayant chacun de 1 à 6 atomes de carbone, un radical amide substitué ayant jusqu'à 12 atomes de carbone, dans lequel les substituants sont choisis parmi le groupe constitué du radical COOM, du radical OH, du radical OCH₃, du radical NH₂, de l'atome de chlore, du radical COOCH₃ et du radical COOCH₂CH₃; un radical SO₃M, un atome de fluor, un atome de chlore ou un atome de brome; ou soit R₂, soit R₃ représente un groupe de formule 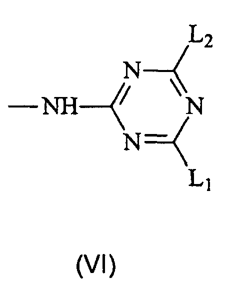
dans laquelle
L₁, L₂ représentent indépendamment un radical OH, un radical alcoxy ayant de 1 à 6 atomes de carbone, un radical thioalkyle substitué par un radical OH, un radical COOM ou un radical SO₃M ayant de 1 à 6 atomes de carbone, un atome de chlore ou un radical NR₆R₇;
R₆, R₇ représentent indépendamment un atome d'hydrogène, un radical alkyle non-ramifié ou ramifié ayant de 1 à 12 atomes de carbone; un radical alkyle substitué ayant de 2 à 6 atomes de carbone, dans lequel les substituants sont choisis parmi le groupe constitué du radi OH, du radical OCH₃, du radical COOM, du radical SO₃M ou du dical N(CH₃)₂; aralkyle; aryle ou aryle substitué, dans lequel substituants sont choisis parmi le groupe constitué du radical OCH₃, de l'atome de chlore, de l'atome de brome, du radical COOM ou radical SO₃M; ou R₆ et R₇ forment un cycle avec ou sans inclusion d'un héteroatome;
X représente un atome d'hydrogène, un atome de chlore ou un atome de brome;
M représente un atome d'hydrogène, un cation métallique ou un cation ammonium optionnellement substitués par un ou plusieurs radica alkyle, optionnellement substitué, ou un radical hydroxyalcoxyalk ayant chacun de 1 à 18 atomes de carbone
et
n vaut 0 ou 1;

2. Colorants monoazoïques selon la revendication 1, dans lesquelles
R₄, R₅, X, M et n sont définis comme à la revendication 1
et
R₁ représente un atome d'hydrogène ou un radical SO₃M.

3. Colorants monoazoïques de formule générale (VII) 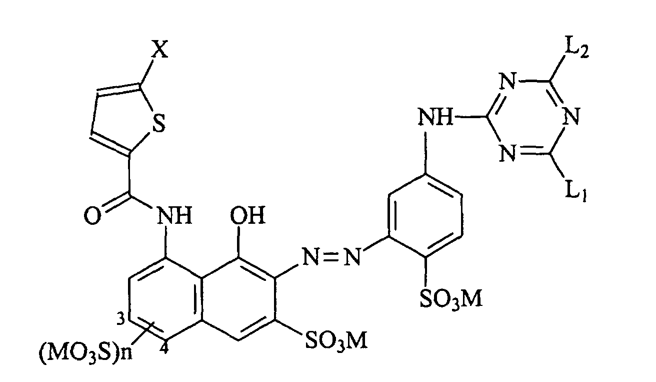 dans laquelle
R₆, R₇, X, M et n sont définis comme à la revendication 1
et
L₁, L₂ représentent indépendamment un radical OH, un radical alcoxy ayant de 1 à 6 atomes de carbone, un radical thioalkyle substitué par un radical OH, un radical COOM ou un radical SO₃M ayant de 1 à 6 atomes de carbone ou un radical NR₆R₇.

4. Procédé de préparation des colorants monoazoïques selon la revendication 1, où
on diazote une amine de formule générale (VIII) 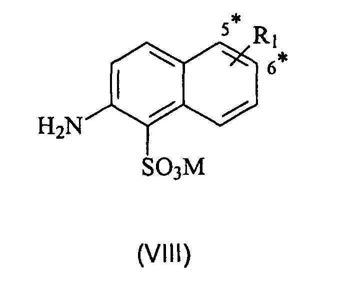 ou (IX) 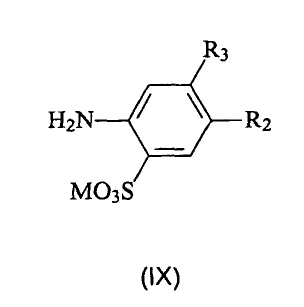 dans lesquelles R₁, R₂, R₃ et M sont définis comme à la revendication 1,
et copule ensuite avec un composé de formule (X), 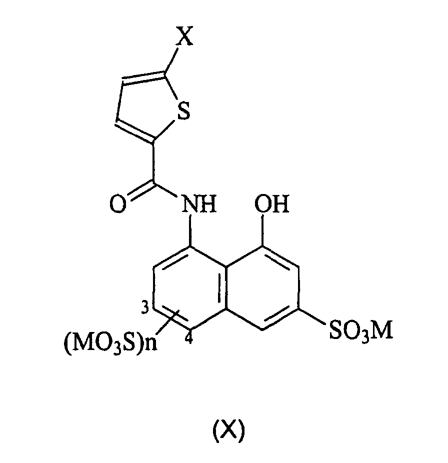 dans laquelle X et n sont définis comme à la revendication 1,
dans des conditions telles que les colorants de formules générales (IV) et (V) selon l'invention soient formés.

5. Utilisation des colorants monoazoïques selon une ou plusieurs des revendications 1 à 3 pour la teinture et l'impression des matériaux cellulosiques, du papier, du cuir et de matériaux textiles tels que le coton, la laine, les polyamides et la viscose.

6. Préparations liquides contenant au moins un colorant monoazoïque ou un mélange de colorants monoazoïques selon une ou plusieurs des revendications 1 à 3.

7. Encres d'impression selon la méthode du jet d'encre qui comprennent au moins un colorant monoazoïque ou un mélange de colorants monoazoïques selon une ou plusieurs des revendications 1 à 3.

8. Encres d'impression selon la méthode du jet d'encre qui comprennent, à coté d'au moins un colorant monoazoïque ou un mélange de colorants monoazoïques selon une ou plusieurs des revendications 1 à 3 un ou plusieurs colorants supplémentaires.

9. Procédé d'impression matériaux textiles en utilisant une encre selon une des revendications 7 ou 8 qui contient un ou plusieurs colorants selon la revendication 1,
dans laquelle
R₂, R₃, R₄, R₅, R₆, R₇, X, M et n sont définis comme à la revendication 1;
R₁ représente le radical SO₂CH₂CH₂OSO₃M
et
L₁ représente un atome de chlore;
où, dans une première étape,
l'encre est déposée sur le matériel textile à l'aide d'une imprimante à jet d'encre et, dans une deuxième étape, le colorant est fixé par chauffage à une température entre 60° C et 130° C.
